# EUROPEAN PATENT APPLICATION

(11) **EP 1 376 929 A1**
(43) Date of publication of application: **02.01.2004**
(21) Application number: 02360182.6
(22) Date of filing: 19.06.2002
(51) Int. Cl.: H04L 12/24, G06F 9/445

(54) **A method, a network application server, a network element, and a computer software product for automatic configuration, installation, and maintenance of network applications**

(71) Applicant: ALCATEL, 75008 Paris (FR)
(72) Inventor: Chantrain, Dominique, 2650 Edegem (BE); Daenen, Koen, 3150 Haacht (BE)
(74) Representative: Brose, Gerhard

(57) **Abstract**

The present invention relates to a method for installing a network application comprising the steps of
- qualifying the network environment of the network application server,
- installing the network application, and
- automatically configuring the network application.

It further relates to a network application server, a network element, and a computer software product for installing a network application and maintaining a network application configuration.

## Description

### BACKGROUND OF THE INVENTION

### Field of the Invention

The present invention relates to a method, an application server, a network element, and a computer software product for automatic configuration, installation, and maintenance of network services, and other types of network applications within a network environment.

### Background

Todays networks, computers, and software becoming more and more complex. Hence the enlargement of a system such as a computer or a network by adding some functionality becomes more complex due to a manifold of dependencies.

This fact is well known from administrating a simple PC. Adding a software component requires a bunch of activities, commonly called installation. For instance the Gnu C compiler installation procedure is broken into five steps: downloading the source files, configuration of the procedure, that is an adaptation of the deployed software designed for many platforms to the concrete one, followed by a building, which is a translation of the source files into a machine understandable format normally called library and/or executable, followed by an optional testing whether the translation was successful, and a final installing, integrating the software into the computer environment.

Because the steps of installation of a software on a computer requires a lot of knowledge, the software industry invented install wizards. Such wizards provide a user a simple graphical representation of a computing environment on a computing platform from which to select applications, custom settings, and files to be transferred, and restrict the freedom for choices according to the dependencies of the platform and the software to be installed, for example.

Software install wizards for PC sometimes include a pre-installation program, that detects whether the PC has sufficient memory, disk-space, etc. to ensure the prerequisite of the new application that one is about to install.

The US patent application No. 6,370,646 claims a method and an apparatus for a multi-platform migration (software distribution). Here the wizard idea is enhanced by a system for migrating a computing environment from a source computing platform to a destination computing platform. A specific engine is described there to resolve specific user-selectable settings of each source software system or application.

Similar configuration problems occur in the network management context where each network element requires a certain knowledge about the functionality to be provided as well as about the environment. Here the complexity is larger, because a network consists of interacting network elements.

In this context, e.g. the US patent application No. 6,047,320, claims a network managing method and system which divides a network to be managed into a plurality of virtual closed area networks, and defines management information on the virtual closed area networks separately in a plurality of logical hierarchies. US patent application No. 6,052,784 for instance claims a network discovery system and method.

Network discovery applications in network management context allow to discover which network elements are installed, and typically also provide information on (part of) their configuration.

For network services US patent application No. 6,286,047 claims a method and a system for automatic discovery of network services. It describes a method for identifying services, service elements and dependencies among the services and service elements includes executing first and second phases of discovery. In the first phase, the services and service elements are detected, as well as a first set of dependencies. The second phase is based on results of the first phase and is focused upon detecting inter-service dependencies, i.e., conditions in which proper operation of one service relies upon at least one other service.

Here configuration, in general, means an arrangement of a system or network as defined by the nature, number, and chief characteristics of its functional units. The term applies to both hardware or software.

For instance a well known installation example is a browser, e.g. Netscape. The URL http://home.netscape.com/computing/download/index.html contains links to installation agents that are capable of performing a software installation based on prior Netscape installation and the available newer releases.

As networks become more complex and offer more functionality, applications will need to interact more and more with the network elements. For example, for selecting virtual private network (VPN) connections, or application network connections in general, with a given quality of service (QoS), application platforms, e.g. a Personalized Service Selector (PSS) are being introduced to provide the end-user easy access to such network functions.

An application typically depends on the underlying network capabilities and configuration. This means that upon installation and configuration of such an application, a manual procedure is needed to determine the network configuration and check its compatibility with the prerequisites set by the application (typically based on guidelines in a user documentation). This is a complex and time-consuming task. Moreover, as network configuration changes, impact on the application server behavior and configuration needs to be verified at all times.

### Technical Problem

Today all these tasks have to be performed manually, which is not only time consuming but also requires well-trained personnel. From a network administrators perspective it would be nice to computerize the complex process of installing and maintaining network applications.

### BRIEF DESCRIPTION OF THE INVENTION

A Network Application Install Wizard is a part of the invention. It is used for qualifying and configuring a network environment and automatic application installation and configuration performing the following method
- qualifying the network environment of the network application to verify that the network meets the prerequisites, or to identify deficiencies,
- forcing an reconfiguration of the network environment within the network's configuration constraints based on the qualification information to ensure that the network meets the prerequisites,
- install the application, and
- automatically configure the application based on available network configuration information.

### OBJECTS AND ADVANTAGES OF THE INVENTION

The invention comprises a **Method** for installing a network application by
- qualifying the network environment of a network application server to verify that the network environment meets the prerequisites,
- installing the network application, and
- automatically configuring the network application and/or the network application server based on available network configuration information;
optionally extended by the steps of
- qualifying the network environment of the network application server to verify that the network environment meets the prerequisites, or to identify deficiencies, and
- forcing a reconfiguration of the network environment within the network's configuration constraints based on the qualification information to ensure that the network meets the prerequisites;

Another part of the invention is the extension of the above **Method** for maintaining a network application configuration comprising the step of detecting a re-configuration of the network environment and respectively reacting with a qualification and/or reconfiguration.

The invention further comprises a **Network Application Server** running network applications comprising
- qualifier means for qualifying the network environment of the network application server to verify that the network environment meets the prerequisites,
- an installer for installing the network application, and
- configuration means for automatically configuring the network application and/or the network application server based on available network configuration information as well as optionally further comprising
- qualifier means for qualifying the network environment of the network application to verify that the network environment meets the prerequisites, or to identify deficiencies, and
- configuration means forcing a reconfiguration of the network environment within the network's configuration constraints based on the qualification information to ensure that the network meets the prerequisites,
- and network application servers supporting a network application maintenance by comprising accordingly means for detecting a re-configuration of a network environment and respectively means for qualification and/or re-configuration.

A further part of the invention is a **Network Element** ensuring network interconnectivity and providing network resources comprising means for supporting an application installation by
- network discovery means for distributing a qualification query about a network application configuration status and about the network application (re-)configuration constraints and gathering network qualification information, and a
- network propagation means for distributing a network application for performing a distributed installation as well as for distributing a re-configuration request and performing a re-configuration within the (re-)configuration constraints of the network element.

Another part of the inventions is a **Computer Software Product** for installing a network application capable of performing the steps of
- qualifying the network environment of a network application to verify that the network environment meets the prerequisites,
- installing the network application, and
- automatically configuring the network application and/or the network application server based on available network configuration information; and further capable of performing the steps of
- qualifying the network environment of a network application server to verify that the network meets the prerequisites, or to identify deficiencies, and
- forcing a reconfiguration of the network environment within the network's configuration constraints based on the qualification information to ensure that the network environment meets the prerequisites,
optionally maintaining a network application capable of detecting a re-configuration of a network environment and respectively capable of performing the steps of qualification and/or re-configuration.

It is a further part of the invention that the **Computer Software Product** for installing and maintaining a network application might comprise a user interface enabling an administrator to control configuration activities.

The central idea of the invention is to combine the ideas of installing wizards with a network discovery and installation procedure.

Accordingly, it is an object and advantage of the present invention to provide an automatic mechanism for the complex and error-prone manual operations configuring a network and installing a network application.

Another advantage of the present invention is that the replacement of the manual operation will not only save time, but also reduce the need for highly-skilled personnel.

Yet another advantage of the present invention is that is possible automatically configuring an application or network based on available network configuration information and the configuration constraints are assured, which result in a higher stability.

These and many other objects and advantages of the present invention will become apparent to those of ordinary skill in the art from a consideration of the drawings and ensuing description.

### BRIEF DESCRIPTION OF THE FIGURES

**Figure. 1** is a schematic drawing of a prior art network environment of an application server.
**Figure. 2** is a schematic drawing of a prior art special network environment, where an application server is connected with a network access server providing a terminal access to the application server.
**Figure. 3** is a detailed view of Figure 2., where the application server is decomposed into a personalized service selector and a qualifier, an installer, and a configurator for installing and configuring a network application, relating to the invention.
**Figure. 4** is a detailed view of Figure 1., where the application server is decomposed into application(s), a qualifier, an installer, and a configurator for installing and configuring a network application, and a network discovery and network propagation component, relating to the invention.

### DETAILED DESCRIPTION OF THE INVENTION

Those of ordinary skill in the art will realize that the following description of the present invention is illustrative only and is not intended to be in any way limiting. Other embodiments of the invention will readily suggest themselves to such skilled persons from an examination of the within disclosure.

A network is a data communications system which interconnects computer systems at various different sites. A network environment is a interconnected sub set of a network.
The interconnected components are called network elements.

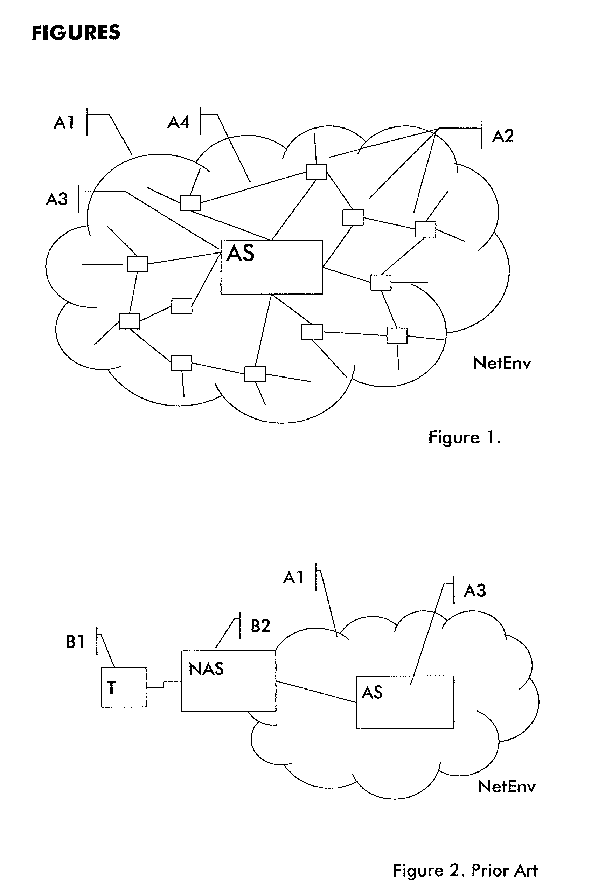

**Figure. 1** shows a network environment NetEnv A1, comprising network elements A2, especially an application server AS A3, and network connections A4.

The picture shows the context of the invention. An application has to be installed on a dedicated network element called application server AS A3. The installation requires information about the whole network environment NetEnv A1. This qualification information is used to install and configure the application. The installation even might required a network re-configuration where the configuration of some network elements A2 has to be adapted within certain configuration constraints.

**Figure. 2** shows a terminal T B1, a network access server NAS B2, the network environment NetEnv A1, and the application server AS A3. The terminal T B1 is connected via the network access server NAS B2 to a network providing especially access to an application server AS A3.

The picture shows an often occurring special context of the invention and provides an illustrating example. A user's terminal B1 has access to the network via a network access server B2. The network A1 provides several services located at the application server A3 and the user is enabled to invoke these services. To install a service or network application, the administrator has to assure especially that the installed service is accessible via the network access server B2. That implies some constraints about the configuration of the application or service itself, the application server AS A3, and the network access server B2.

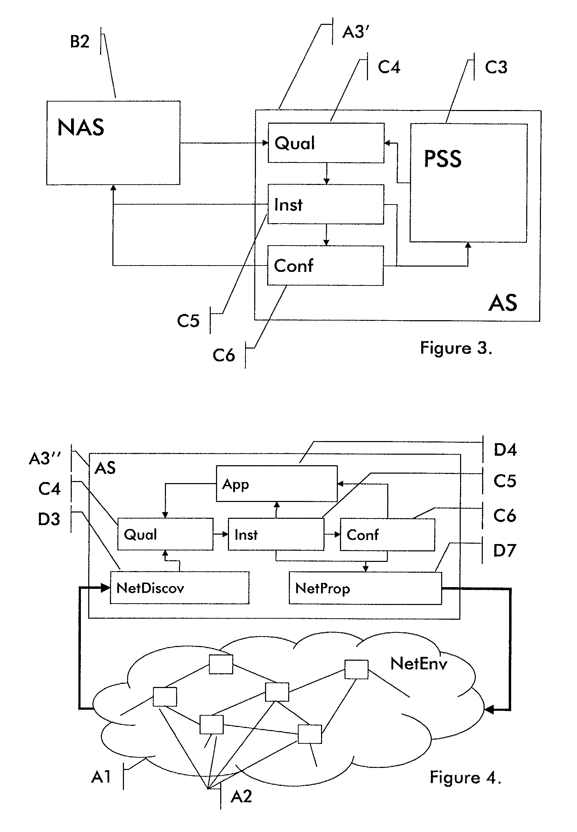

Figure. 3 is a detailed view of Figure 2 showing the invention. A enhanced application server AS A3' comprises a qualifier Qual C4, an installer Inst C5 and a configurator Conf C6, as well as a personalized service selector PSS C3. The figure further shows a network access server NAS B2 that is connected with the application server AS A3. More precisely the network access server NAS B2 is connected with the qualifier Qual C4, the installer Inst C5, and the configurator Conf C6. The personalized service selector PSS C3 is connected with the qualifier Qual C4, the installer Inst C5, and the configurator Conf C6.

The picture shows the information flow between the components. Qualification information about the network access server B2 as well as about the personalized service selector C3 is gathered by the qualifier C4, illustrated by arrows pointing to the qualifier C4. The qualifier C4 provides this information to the installer C5, illustrated by an arrow pointing to the installer C5. The installer C5 integrates the application into the personalized service selector C3 and might install components at the network access server B2, illustrated by two arrows pointing to the network access server B2 and the personalized service selector C3. Furthermore, the installer C5 provides the gathered qualification information as well as the installation information to the configurator C6, illustrated by an arrow pointing to the configurator C6. And the configurator C6 performs the re-configuration of the personalized service selector C3 as well as the network access server C2, illustrated by two arrows pointing to the network access server B2 and the personalized service selector C3.

As mentioned above the problem can be compared to an installation of application software on a personal computer (PC). Also here typically an application imposes some prerequisites in terms of PC capabilities (memory, processing power, operating system, etc. and configuration (e.g. devices, network connectivity, etc.). In this field the problem has been solved by introducing installation wizards (sometimes referred to as "qualifiers", like Broadjump Virtual Truck Qualifier) which automatically detect the PC's configuration and indicate whether it is compliant with the requirements of the software to be installed.

The invention introduces a similar concept for applications that enrich the network by services. The method comprises several steps illustrated with an example. We consider the example of a personalized service selector C3. To offer its features, the personalized service selector C3 requires that the associated IP Gateway functionality in the network, generally a network access server B2, (typically a broadband access server) is configured in a specific way, e.g. it must run at least release x.x SW, it must use personalized service selector C3 as remote authentication dial-in user service (RADIUS server), its virtual private network (VPN), configuration should correspond to VPN data in the personalized service selector C3, etc.

The solution to the problem is to introduce a dedicated qualifier C4 component, to be run on the application server A3, which is executed typically before the installation process of the personalized service selector C3, and which verifies that the network access server B2 meets these configuration requirements. This can be achieved by using existing configuration interfaces of the network access server B2, e.g. Simple Network Management Protocol (SNMP) or Command Line Interface (CLI), etc.

The main difference between the invention and a simple install wizard on a PC, is that the application, that is to be installed, runs on a different machine than the network element from which it discovers the configuration. Actually, multiple network elements can be involved. It's about qualifying a network configuration, rather than the configuration of a single machine.

The configuration information of the network access server B2 cannot only be used to verify if it meets the personalized service selector prerequisites, but also to populate e.g. some of the personalized service selector's data. Indeed, VPN data in the personalized service selector C3 has to correspond to the VPN configuration of the network access server C2. So an automatic configuration application could detect the VPN configuration of the network access server B2, and populate the corresponding fields e.g. in the personalized service selector's database, such that application level information, e.g. graphical logo's, URLs, etc. of the VPNs can easily be added later on by an operator, while avoiding mismatch in configuration. In addition, if the application supports inter-working with different types of equipment, e.g. lP gateways from different vendors, it can detect the type of IP gateway and adapt its settings to use the corresponding interfaces and scenarios, e.g. vendor-specific RADIUS attributes. As a result the original installation procedure is now extended to a 3 step procedure:
- run qualifier to verify that the network meets the prerequisites,
- install the application, and
- automatically configure the application based on available network configuration information.

**Figure. 4** is a detailed view of the general picture in Figure 1 showing the invention in full generality. A application server AS A3" contains several components: the qualifier Qual C4, a network discovery module NetDicov D3, one or more applications App D4, the installer Inst C5, the configurator Conf C6, and a network propagation module NetProp D7. Further the picture shows the network environment NetEnv A1 of the application server A3", comprising several network elements A2, similar to Figure 1.

The picture shows the information flow between the components in a more general case. When the application(s) D4 have to be enriched by a further application, the qualifier C4 gathers qualification information from the application server A3" and especially from the application(s) D4, as well as from a network discovery performed by the network discovery module D3. The network discovery gathers the qualification information out of the network environment A1, more precisely from affected network elements A2. The qualification information is used by the installer C5 to enrich the application(s) D4, e.g. to update an application or to install a new application. It might be necessary to force installation and configuration activities at network elements A2 in the network environment A1 different from the application server A3" by the network propagation module D7. Furthermore, the installer C5 triggers the configurator C6 to perform a corresponding configuration of the new application, more generally of the application server A3", and (optionally) of the network environment A1, i.e. of the affected network elements A2.

As illustrated a further extension of the qualifier consist in configuring the network to match the prerequisites of the application. So, instead of reading network configuration parameters to populate the data of the application, the application could (typically after acknowledgement of an operator) automatically re-configure the network to meet the prerequisites.

The principle can be extended to more complex network environments, where an application platform interacts with a set of network elements. In this context typically the qualifier and automatically configuration will invoke existing network discovery module to obtain the relevant network configuration information. Note that the discovery might be performed by invoking a network database containing a network description. In this case, correspondingly the network propagation module has to update this database accordingly for consistency and integrity.

The qualifier and automatically configuration can also be used later on (after installation) for network configuration maintenance. Whenever the network configuration is modified, to detect impact on the application and automatically update the necessary application and network configuration.

The network application could be distributed requiring a collaborative installation procedure where the configuration should be distributed and aligned between each single application component.

Due to the complexity by the bunch of dependencies and constraints the described configurator might be realized using an inference mechanism like a non-imperative programming language, e.g. a rule based like OPS-5 or a logic based like PROLOG. For simple installations and configurations an imperative scripting language might be well suited.

### Alternative Embodiments

Although illustrative presently preferred embodiments and applications of this invention are shown and described herein, many variations and modifications are possible which remain within the concept, scope, and spirit of the invention, and these variations would become clear to those of skill in the art after perusal of this application.

For instance it is obvious to extend the described method for distributed applications.

Also it is straight forward to invoke network models or back-up components and to use the described method not for the real network but to simulate the automatic configuration in a first dry run before, when successful, propagating the simulated model on the real network. This network model might be e.g. a database or a dedicated network environment.

The invention, therefore, is not intended to be limited except in the spirit of the appended claims.

## Claims

1. A **Method** for installing a network application (D4) comprising the steps of
- qualifying the network environment (A1 ) of a network application server (A3") to verify that the network environment (A1) meets the prerequisites,
- installing the network application (D4), and
- automatically configuring the network application (D4) and/or the network application server (A3") based on available network configuration information.

2. The **Method** for installing a network application (D4) according to Claim 1 further comprising the steps of
- qualifying the network environment (A1) of the network application server (A3") to verify that the network environment (A1) meets the prerequisites, or to identify deficiencies, and
- forcing a reconfiguration of the network environment (A1) within the network's configuration constraints based on the qualification information to ensure that the network meets the prerequisites.

3. The **Method** for maintaining a network application configuration comprising the step of detecting a re-configuration of the network environment (A1) and respectively reacting with a qualification and/or re-configuration according to Claim 1.

4. A **Network Application Server** (A3") for running at least one network application (D4) comprising
- qualifier means for qualifying (C4, D3) the network environment (A1) of the network application server (A3") to verify that the network environment (A1) meets the prerequisites,
- an installer for installing (D5) the network application (D4), and
- configuration means (C6) for automatically configuring the network application (D4) and/or the network application server (A3") based on available network configuration information.

5. The **Network Application Server** (A3") for running a network application according to Claim 4 further comprising
- qualifier means for qualifying (C4, D3) the network environment (D8) of the network application to verify that the network environment (D8) meets the prerequisites, or to identify deficiencies, and
- configuration means (C6, D7) forcing a reconfiguration of the network environment (D8) within the network's configuration constraints based on the qualification information to ensure that the network meets the prerequisites.

6. The **Network Application Server** (D1) supporting a network application maintenance by comprising means for detecting a re-configuration (D3) of a network environment (D8) and respectively means for qualification (D2) and/or re-configuration (D6, D7) according to Claim 4.

7. A **Network Element** (D9) for ensuring network interconnectivity and providing network resources comprising means for supporting an application installation by
- network discovery means (D3) for distributing a qualification query about a network application configuration status and about the network application (re-)configuration constraints and gathering network qualification information, and a
- network propagation means (D7) for distributing a network application for performing a distributed installation as well as for distributing a re-configuration request and performing a re-configuration within the (re-)configuration constraints of the network element.

8. A **Computer Software Product** for installing a network application (D4) capable of performing the steps of
- qualifying the network environment (D8) of a network application (D4) to verify that the network environment (D8) meets the prerequisites,
- installing the network application (D4), and
- automatically configuring the network application (D4) and/or the network application server (A3") based on available network configuration information.

9. The **Computer Software Product** for installing a network application (D4) according to Claim 8. capable of further performing the steps of
- qualifying the network environment (D8) of a network application server (D1) to verify that the network meets the prerequisites, or to identify deficiencies, and
- forcing a reconfiguration of the network environment (D8) within the network's configuration constraints based on the qualification information to ensure that the network environment (D8) meets the prerequisites.

10. The **Computer Software Product** for maintaining a network application (D4) capable of detecting a re-configuration of a network environment (D8) and respectively capable of performing the steps of qualification and/or re-configuration according to Claim 8.

11. The **Computer Software Product** for installing and maintaining a network application (D4) according to Claim 8 comprising a user interface that enables an administrator to control configuration activities.
